# EUROPÄISCHE PATENTANMELDUNG

(11) **EP 1 544 654 A1**
(43) Veröffentlichungstag der Anmeldung: **22.06.2005**
(21) Anmeldenummer: 04029508.1
(22) Anmeldetag: 14.12.2004
(51) Int. Cl.: G02B 21/06

(54) **Beleuchtungseinrichtung für ein Mikroskop**

(30) Priorität: 16.12.2003 DE 20319495 U
(71) Anmelder: CARL ZEISS JENA GmbH, 07745 Jena (DE)
(72) Erfinder: Mitzkus, Reiner, 37085 Göttingen (DE)

(57) **Zusammenfassung**

Die vorliegende Erfindung betrifft eine Beleuchtungseinrichtung für ein Mikroskop mit der eine zu untersuchende Probe großflächig beleuchtet werden kann, um diese in seiner Gesamtheit zu betrachten und entsprechend auszurichten.

Die erfindungsgemäße Beleuchtungseinrichtung für ein Mikroskop ist dadurch gekennzeichnet, dass eine zusätzliche Beleuchtungsquelle vorhanden und so am Mikroskop oder an Mikroskopkomponenten angeordnet ist, dass der Probenraum großflächig und/oder punktuell ausgeleuchtet wird. Die zusätzliche Beleuchtungsquelle ist dabei vorzugsweise separat schaltbar und/oder in ihrer Intensität regelbar.

In einer vorteilhaften Ausgestaltung ist die zusätzliche Beleuchtungsquelle nach dem Einschaltvorgang dauernd oder für eine vorwählbare Zeitdauer aktiv.

Die vorgeschlagene Lösung ist prinzipiell für alle Arten von Mikroskopen verwendbar bei denen das Mikroskopieren im abgedunkelten Räumen erfolgt. Die Probe kann dadurch gezielt aufgenommen, auf dem Mikroskoptisch platziert und ausgerichtet werden. Um den zu untersuchenden Ausschnitt zu bestimmen und im Strahlengang zu positionieren, kann die Probe zuvor in ihrer Gesamtheit betrachtet werden.

## Beschreibung

Die vorliegende Erfindung betrifft eine Beleuchtungseinrichtung für ein Mikroskop mit der eine zu untersuchende Probe großflächig beleuchtet wird, um diese in seiner Gesamtheit betrachten und entsprechend ausrichten zu können.

Die nach dem bekannten Stand der Technik bekannten Mikroskope verfügen meist nur über die für die Darstellung erforderliche Objektbeleuchtung für Auf- und Durchlicht. Im einfachsten Fall verfügen derartige Mikroskope dazu über eine erste, am Mikroskopkopf angeordnete Beleuchtungsquellen für die Auflichtbeleuchtung sowie über eine im Mikroskopfuß angeordnete zweite Beleuchtungsquelle für die Durchlichtbeleuchtung. Diese sind in der Regel separat schalt- und/oder regelbar. Die am Mikroskopkopf angeordnete Beleuchtungsquelle führt jedoch dazu, daß das zu untersuchende Präparat erwärmt wird. Um diesen Nachteil zu beheben wurden Mikroskope entwickelt, die nur über eine Beleuchtungsquelle verfügen, die sich meist im Inneren des Mikroskops befindet und die Wärmestrahlung der Lichtquelle abschirmt.

In der DE 88 08 178 U1 wird ein Mikroskop beschrieben, welches über nur eine Beleuchtungseinrichtung verfügt. Diese ist im Mikroskopfuß angeordnet und beleuchtet den Objekttisch wahlweise von unten (im Durchlicht) oder über ein Umlenksystem von oben (im Auflicht). In einer vorteilhaften Ausgestaltung sind für die unterschiedlichen Beleuchtungsarten auch verschiedene Beleuchtungsquellen vorhanden, die separat geschaltet und/oder in ihrer Helligkeit einstellbar sind. Für die Auflichtbeleuchtung ist ein zusätzliches Kondensorsystem vorgesehen, welches das Beleuchtungslicht annähernd parallel bündelt, so daß die Beleuchtungsstärke unabhängig vom Lichtweg ist. Die Beleuchtung ist somit auf die Ausleuchtung der auf dem Objekttisch befindlichen Probe beschränkt. Eine Ausleuchtung des gesamten Probenraumes bzw. des Raumes unmittelbar neben dem Mikroskop ist nicht möglich. Das Aufnehmen und sichere Ablegen einer Probe auf dem Objekttisch wird dabei dadurch erschwert, daß das Mikroskopieren in der Regel in einem abgedunkelten Raum erfolgt.

Eine Beleuchtungseinrichtung für Mikroskope insbesondere zur Untersuchung pathologischer Präparate wird in der DE 201 16 198 U1 vorgeschlagen. Bei dieser Lösung wird das Licht der im Mikroskopfuß angeordneten Lichtquelle über verschiedene Umlenkelemente zur Durchlicht- oder Auflichtbeleuchtung in die Abbildungsebene geführt. Der Beleuchtungsstrahlengang wird im weiteren aufgespaltet, um neben dem Strahlengang für die Mikroskopie einen zusätzlichen Strahlengang für die externe Beleuchtung des Präparates zu erzeugen. Dadurch wird es vor dem eigentlichen Mikroskopieren möglich, das Präparat auf dem Objekttisch direkt zu betrachten und eine Lageorientierung vorzunehmen. Der gerätetechnische Aufwand wird durch die erforderlichen Umlenkelemente und die optischen Elemente zur Aufspaltung des Beleuchtungsstrahlengangs wesentlich erhöht, zumal die externe Beleuchtung nur kurzzeitig erforderlich ist und ein Intensitätsverlust der Beleuchtung zum Mikroskopieren vermieden werden sollte.

Der vorliegenden Erfindung liegt die Aufgabe zugrunde eine Lösung zu entwickeln mit der es insbesondere in abgedunkelten Räumen möglich ist die zu untersuchende Probe gezielt aufnehmen, auf dem Mikroskoptisch plazieren und ausrichten zu können.

Erfindungsgemäß wird die Aufgabe durch die Merkmale des unabhängigen Anspruches gelöst. Bevorzugte Weiterbildungen und Ausgestaltungen sind Gegenstand der abhängigen Ansprüche.

Die vorgeschlagene Lösung ist prinzipiell für alle Arten von Mikroskopen verwendbar bei denen das mikroskopieren vorzugsweise im abgedunkelten Räumen erfolgt.

Nachfolgend wird diese Lösung anhand von Ausführungsbeispielen näher beschrieben. Dazu zeigt:

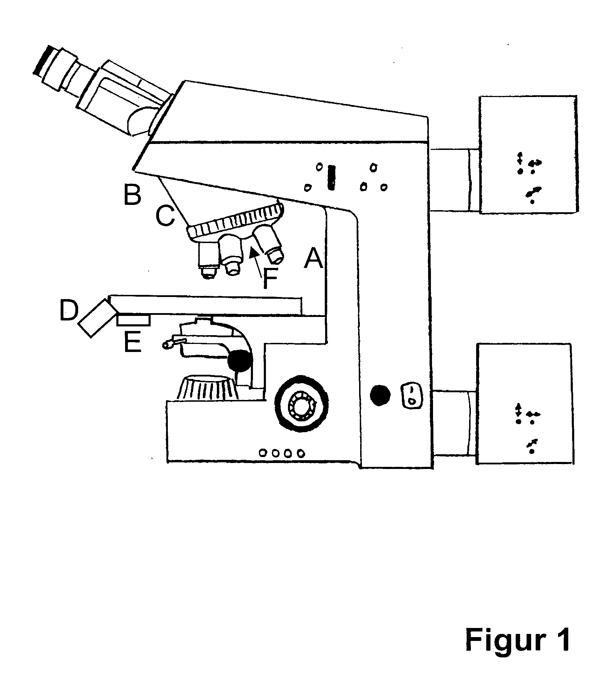

- Figur 1:: ein Mikroskop und die bevorzugten Positionen für die zusätzliche Beleuchtungseinheit.

Die vorgeschlagene Lösung betrifft eine Beleuchtungseinrichtung für ein Mikroskop. Eine zusätzliche Beleuchtungsquelle ist dabei so am Mikroskop angeordnet, dass der Probenraum großflächig und/oder punktuell ausgeleuchtet wird. **Figur 1** zeigt dazu bevorzugte Positionen **A** bis **F** für die zusätzliche Beleuchtungsquelle. Als Probenraum ist hierbei der Raum oberhalb des Objekttisches anzusehen. Die zusätzliche Beleuchtungsquelle ist separat, automatisch oder manuell schaltbar und/oder in ihrer Intensität regelbar. Die Beleuchtungsquelle kann vorzugsweise nach dem Einschaltvorgang nur für eine vorwählbare Zeitdauer aktiv sein.

Als zusätzliche Beleuchtungsquelle sind dabei verschiedenste Lichtquellen, wie beispielsweise Leuchtfolien, Leuchtdioden, Glimmlampen, Glühlampen, Halogenlampen, Leuchtstofflampen oder auch Gasentladungslampen unterschiedlicher Wellenlänge verwendbar. Für eine großflächige, diffuse Beleuchtung werden vorzugsweise weiße Leuchtfolien oder weißes Licht aussendende Leuchtdioden-Arrays eingesetzt. Für punktuelle Beleuchtungen werden bevorzugt einzelne Leuchtdioden, Halogenlampen, Glimmlampen, Gasentladungslampen oder Leuchtstofflampen verwendet. Vorteilhaft werden von der Beleuchtungsquelle zusätzlich die Stellflächen unmittelbar neben dem Mikroskop ausgeleuchtet.

Bei einer farbigen Beleuchtung kann eine den Kontrast verstärkende Wirkung zur besseren Erkennbarkeit des Präparates erzielt werden.

Dazu könnten mehrfarbige LEDs (blau, grün, rot) verwendet werden, die als Mischfarbe weiß ergeben. Durch geeignete Ansteuerung, d. h. an- und abschalten bzw. dimmen, der einzelnen farbigen LED, kann die Mischfarbe eingestellt werden, die den besten Kontrast bei dem verwendeten Präparat erzielt.

In einer weiteren Ausgestaltung können vor der Beleuchtungsquelle optische Elemente zum formen und leiten des ausgesendeten Lichtes angeordnet sein. Diese können beispielsweise Linsen, Linsenarrays, Filter, Spiegel, Umlenkprismen, Lichtleitfasern o. ä. sein.

In einer besonders vorteilhaften Ausgestaltung ist die Beleuchtungsquelle mit einer Einheit verbunden, die diese bei Annäherung oder Berührung des Mikroskoptisches durch die Hand des Bedieners oder einen Gegenstand für eine definierte Zeit einschaltet.

Mit der vorgeschlagenen Lösung zur Beleuchtung des Probenraumes von Mikroskopen kann auch beim Mikroskopieren in abgedunkelten Räumen gewährleistet werden, dass die zu untersuchende Probe gezielt aufgenommen, auf dem Mikroskoptisch platziert und dadurch auch schneller ausgerichtet werden kann. Die Probe kann somit in ihrer Gesamtheit betrachtet werden, um den zu untersuchenden Ausschnitt zu bestimmen und in den Strahlengang zu positionieren.

## Patentansprüche

1. Beleuchtungseinrichtung für ein Mikroskop **dadurch gekennzeichnet, dass** eine zusätzliche Beleuchtungsquelle vorhanden und so am Mikroskop oder an Mikroskopkomponenten angeordnet ist, dass der Probenraum großflächig und/oder punktuell ausgeleuchtet wird.

2. Beleuchtungseinrichtung nach Anspruch 1, **dadurch gekennzeichnet, dass** die zusätzliche Beleuchtungsquelle separat schaltbar und/oder in ihrer Intensität regelbar ist.

3. Beleuchtungseinrichtung nach Anspruch 1, **dadurch gekennzeichnet, dass** die zusätzliche Beleuchtungsquelle nach dem Einschaltvorgang wahlweise dauernd oder für eine vorwählbare Zeitdauer aktiv ist.

4. Beleuchtungseinrichtung nach Anspruch 1 und 2, **dadurch gekennzeichnet, dass** die zusätzliche Beleuchtungsquelle die Stellflächen unmittelbar neben dem Mikroskop ebenfalls ausleuchtet.

5. Beleuchtungseinrichtung nach mindestens einem der vorgenannten Ansprüche, **dadurch gekennzeichnet, dass** die zusätzliche Beleuchtungsquelle mit einer Einheit verbunden ist, die die Beleuchtungsquelle bei Annäherung oder Berührung des Mikroskoptisches durch die Hand des Bedieners oder einen Gegenstand für eine definierte Zeit einschaltet.

6. Beleuchtungseinrichtung nach mindestens einem der vorgenannten Ansprüchen, **dadurch gekennzeichnet, dass** die zusätzliche Beleuchtungsquelle zur Kontrastverstärkung einfarbig oder aus einer Mischfarbe verschiedenfarbiger Lichtquellen besteht.

7. Beleuchtungseinrichtung nach Anspruch 6, **dadurch gekennzeichnet, dass** die zusätzliche Beleuchtungsquelle bei Verwendung verschiedenfarbiger Lichtquellen durch Helligkeitsregelung der einzelnen Lichtquellen in seinem Farbton eingestellt werden kann.
